**Europäisches Patentamt**

**European Patent Office**

**Office européen des brevets**

(19)

(11) Numéro de publication : **0 313 467 B1**

(12)

# FASCICULE DE BREVET EUROPEEN

(45) Date de publication du fascicule du brevet :
**04.09.91 Bulletin 91/36**

(51) Int. Cl.⁵ : **C08F 255/02, C09D 123/00,**
**// (C09D123/00, C08L51:06)**

(21) Numéro de dépôt : **88402655.0**

(22) Date de dépôt : **21.10.88**

(54) **Poly et copolymères d'éthylène greffés et leur application comme liants pour revêtements.**

(30) Priorité : **22.10.87 FR 8714599**

(43) Date de publication de la demande :
**26.04.89 Bulletin 89/17**

(45) Mention de la délivrance du brevet :
**04.09.91 Bulletin 91/36**

(84) Etats contractants désignés :
**AT BE CH DE ES FR GB GR IT LI LU NL SE**

(56) Documents cités :
**FR-A- 1 566 391**
**FR-A- 2 424 931**
**LU-A- 58 965**
**CHEMICAL ABSTRACTS, vol. 97, no. 13, octo-**
**bre 1982, Columbus, OH (US); p. 41, no.**
**128585q**

(73) Titulaire : **ATOCHEM**
**4 & 8, Cours Michelet La Défense 10**
**F-92800 Puteaux (FR)**

(72) Inventeur : **Demay, Henri**
**34, rue des Jardiniers**
**F-60300 Senlis (FR)**
Inventeur : **Hauschild, Rémy**
**71 Boulevard Arago**
**F-75013 Paris (FR)**
Inventeur : **Nicco, Adrien**
**12, rue de l'Egalité**
**F-62400 Bethune (FR)**

(74) Mandataire : **Rochet, Michel et al**
**ATOCHEM Département Propriété Industrielle**
**La Défense 10 Cédex 42**
**F-92091 Paris La Défense (FR)**

## Description

La présente invention a pour objet des résines qui sont des polyéthylènes greffés ou des copolymères d'éthylène greffés et qui sont, thermoplastiques ou le cas échéant réticulables, solubles à température ambiante dans des solvants organiques et/ou des milieux aqueux.

L'invention a également pour objet un procédé de préparation de ces résines ainsi que leur application comme liants pour revêtements notamment dans les peintures, les vernis et les encres.

Des poly- et copolymères d'éthylène greffés sont actuellement bien connus. Ils présentent des propriétés modifiées mais qui restent voisines de celles du poly- et du copolymère d'éthylène d'origine, le greffage servant surtout à modifier certaines caractéristiques spécifiques, telles que la facilité de teinture, l'amélioration de l'adhérence. Ils sont en effet thermoplastiques et insolubles à température ambiante dans les solvants organiques usuels tels que les hydrocarbures, les alcools, les esters, les éthers, les cétones.

On connaît différentes méthodes de fabrication de ces poly et copolymères d'éthylène greffés.

Selon une première méthode, on soumet des feuilles de polyéthylène mis en présence de monomères seuls ou en solution à des radiations de haute énergie telles que des rayons $\alpha$, $\gamma$, ou un bombardement d'électrons. On obtient des feuilles de polyéthylène avec des caractéristiques de surface modifiées. Egalement, on constate dans la solution la formation d'homo-polymères.

Selon une deuxième méthode, décrite dans la demande européenne 100912, on effectue l'opération de greffage sur le polyéthylène à l'état fondu en présence de styrène et d'initiateurs de radicaux libres, et éventuellement d'un solvant organique. Parallèlement à la formation d'homopolymères, on obtient des polyéthylènes modifiés présentant d'exellente qualité d'adhésion et servant d'adhésifs sur les polyoléfines. Ces polyéthylènes modifiés ne sont pas solubles à température ambiante dans les solvants organiques.

La présente invention a pour objet des poly- et copolymères d'éthylène greffés possédant des caractéristiques chimiques et physiques variées, largement différentes de celles du polyéthylène d'origine, à savoir des poly- et copolymères d'éthylène greffés pouvant être des thermoplastiques ou le cas échéant réticulables et qui sont solubles dans des solvants organiques à température ambiante et / ou des milieux aqueux.

Plus précisément, l'invention a pour objet des poly- et copolymères d'éthylène greffés caractérisés en ce qu'ils sont thermoplastiques ou le cas échéant réticulables, solubles à température ambiante dans des solvants organiques et/ou des milieux aqueux et en ce qu'ils sont préparés par polymérisation de (en % en poids par rapport à la résine obtenue) :

— 0,5 à 30% d'au moins un polyéthylène non oxydé et / ou un copolymère d'éthylène non oxydé à base d'au moins 70% en poids d'éthylène, le dit polyéthylène ou copolymère d'éthylène étant défini par les propriétés suivantes :

- un poids moléculaire moyen (Mw) en poids compris entre 900 et 60 000,
- une viscosité Brookfield à 190°C comprise entre 0,1 et 500 poises (0,01 et 50 Pas) et/ou une viscosité Brookfield à 140°C comprise entre 0,1 et 2000 poises (0,01 et 200 Pas),
- une cristallinité mesurée par rayon X comprise entre 10 et 80%,
- et comprenant éventuellement des fonctions esters, anhydrides ou acides provenant des comonomères de l'éthylène,

— 70 à 99,5% de monomères insaturés tels que des monomères styréniques, vinyliques, acryliques et/ou méthacryliques,

en présence d'au moins un initiateur de radicaux libres et d'au moins un solvant organique.

Dans la suite de ce texte, on parlera de poly- et de copolymères d'éthylène pour désigner à la fois les polyéthylènes non oxydés et les copolymères d'éthylène non oxydés à base d'au moins 70% en poids d'éthylène et dont les propriétés (Mw, viscosité à 190°C ou 140°C, cristallinité) sont définies ci-dessus. Par polyéthylènes non oxydés et copolymères d'éthylène non oxydés, on entend les polyéthylènes et les copolymères d'éthylène n'ayant pas subi de traitement d'oxydation.

Dans des travaux antérieurs décrits dans la demande de brevet français FR-A-2597489, la demanderesse a mis au point des polyéthylènes greffés, thermoplastiques ou thermodurcissables, solubles dans les solvants organiques et/ou les milieux aqueux. Préalablement au greffage, ces polyéthylènes sont soumis à une opération d'oxydation.

De manière surprenante, la demanderesse a découvert que l'on peut également fabriquer des résines thermoplastiques ou le cas échéant réticulables, solubles dans des solvants organiques et/ou des milieux aqueux à partir de poly- ou de copolymères d'éthylène non oxydés, possédant d'autre part les caractéristiques mentionnées ci-dessus.

Parmi les copolymères d'éthylène convenant à la présente invention, on peut citer les terpolymères décrits dans le brevet français 2498608 et comprenant (en % molaire) :

— 88 à 98,7% de motifs dérivés de l'éthylène,

2

EP 0 313 467 B1

— 1 à 10% de motifs dérivés d'un ester choisi parmi les acrylates et méthacrylates d'alkyle, le dit groupe alkyle ayant de 1 à 6 atomes de carbone,
— de 0,3 à 3% de motifs dérivés de l'anhydride maléïque.

A cette liste, on peut également ajouter les terpolymères qui sont à base d'éthylène (au moins 70% en poids), d'acétate de vinyle et d'acide acrylique ou d'acide méthacrylique, ainsi que les terpolymères à base de 80 à 98,5% molaire d'éthylène, 1 à 15% molaire d'ester acrylique on méthacrylique et 0,5 à 5% molaire d'acide acrylique ou d'acide méthacrylique.

Parmi les monomères insaturés convenant parfaitement pour la formation de chaines latérales sur le polyéthylène, on peut citer les monomères méthacryliques et acryliques tels que l'acide (méth)acrylique, les esters (méth)acryliques, par exemple le (méth)acrylate de méthyle, le (méth)acrylate d'éthyle, le (méth)acrylate de butyle, le (méth)acrylate de 2-éthyle hexyle, les monomères méthacryliques hydroxylés tels que le (méth)acrylate de 2-hydroxy-éthyle, le (méth)acrylate de 2-hydroxypropyl ; les monomères (méth)acryliques comprenant des groupes amino tels que le (méth)acrylate de N,N-diméthylaminoéthyle, le (méth)acrylate de N,N-diéthylaminoéthyle ; les monomères styréniques tels que le styrène, les méthylstyrènes ; les monomères vinyliques tels que l'acétate de vinyle.

Parmi les initiateurs de polymérisation radicalaire utilisables, on peut citer les peroxydes tels que le peroxyde de benzoyle, le peroxyde de ditertiobutyle, le peroxyde de lauryle ; les perbenzoates tels que le perbenzoate de tertiobutyle ; les hydroperoxydes tels que l'hydroperoxyde de cumène ; les composés diazoïques tels que le 2,2'-azobis(isobutyronitrile), le 2,2'azobis(2-méthylbutyronitrile). Les initiateurs de polymérisation radicalaire sont généralement utilisés à raison de 1 à 4% en poids d'initiateur par rapport au poids des monomères.

La présente invention a également pour objet un procédé de préparation des résines selon l'invention selon lequel :

a) on prépare une phase dispersée en dispersant au moins un polyéthylène et/ou au moins un copolymère d'éthylène sous agitation, dans au moins un solvant organique, à une température supérieure à la température de fusion du dit polyéthylène ou du dit copolymère d'éthylène ;

b) ensuite, on introduit progressivement dans la phase dispersée obtenu au moins un monomère éthylènique et au moins un initiateur de polymérisation radicalaire, de manière à permettre le greffage de chaines de monomères sur le polyéthylène et/ou sur le copolymère d'éthylène. L'introduction du ou des monomères éthyléniques s'effectue généralement entre 1 et 6 heures, et de préférence entre 2 et 4 heures.

c) pour compléter la polymérisation, la réaction et ensuite poursuivie à une température égale ou supérieure à celle choisie dans l'étape (b). Selon les cas, cette étape s'effectue entre 1/2 et 2 heures et de préférence pendant 1 heure 1/2.

De préférence, pour des facilités de mise en oeuvre, pendant l'étape a), on prévoit une température de réaction supérieure de 5 à 15°C par rapport à la température de fusion du polyéthylène ou du copolymère d'éthylène.

De préférence encore, on maintient la température constante pendant l'étape (b), à une valeur égale ou supérieure à celle choisie dans l'étape (a).

En fin de réaction, après refroidissement, la résine fabriquée est traitée de façon appropriée selon sa destination ultérieure dont quelques exemples seront donnés dans la suite de ce texte. Ainsi, la résine obtenue, quand elle comporte des fonctions carboxyles, peut être solubilisée dans les milieux aqueux et être diluable à l'eau par neutralisation de ces fonctions carboxyles avec une base telle qu'une amine et/ou un aminoalcool.

Le ou les solvants organiques utilisés dans le procédé selon l'invention constituent le milieu dans lequel on disperse le polyéthylène et/ou le copolymère d'éthylène lesquels sont insolubles à température ambiante : il s'agit de l'étape a) de l'invention. Ensuite, au fur et à mesure que la réaction de formation de chaines de monomères sur le polyéthylène et/ou le copolymère d'éthylène progresse (étape b), on assiste à la solubilisation progressive du polyéthylène et/ou du copolymère d'éthylène.

Parmi les solvants organiques utilisables dans le procédé selon l'invention, on peut citer les glycols tels que l'éthylène-glycol, le propylène glycol ; les esters tels que l'acétate d'éthylglycol ; les éthers tels que le butylglycol ; les alcools supérieurs tels que le n-butanol, l'alcool benzylique ou encore les solvants aromatiques tels que le xylène, le toluène. On peut également utiliser comme solvant des composés organiques qui ont une température d'ébullition élevée ou des composés organiques solides à température ambiante. Ces composés doivent être relativement inertes vis-à-vis du milieu réactionnel et posséder une faible viscosité à la température de réaction. Il peut être en effet particulièrement intéressant d'utiliser comme solvant un composé peu volatil à température ambiante et possédant des propriétés particulières dont il fera bénéficier les résines selon l'invention. Dans cette dernière catégorie de solvant, on peut citer des plastifiants tels que les phtalates, les adipates, les citrates ; les dérivés oxyéthylénés tels que l'alcool laurique oxyéthyléné, le nonylphénol contenant en moyenne 10 molécules d'oxyde d'éthylène (nom abrégé NP 10), le nonylphénol contenant en moyenne 30

3

molécules d'oxyde d'éthylène (nom abrégé NP 30)- ou le nonylphénol contenant en moyenne 100 molécules d'oxyde d'éthylène (nom abrégé NP 100) ; des trialkylphosphates tels que le triméthylphosphate, le triéthylphosphate, le tributoxyéthylphosphate, qui donnent à la résine formulée une excellente résistance à la chaleur. On peut également utiliser une combinaison de deux ou plusieurs des solvants cités ci-dessus.

L'invention est avantageuse à plus d'un titre.

Les résines selon l'invention constituent tout d'abord une nouvelle gamme variée de résines à base de polyéthylène et / ou de copolymère d'éthylène solubles à température ambiante dans les solvants organiques usuels tels que les alcools, esters, ethers ou cétones ou encore hydrodiluables, thermoplastiques ou le cas échéant, réticulables quand la résine obtenue comporte des fonctions carboxyles ou hydroxyles, ou amines par réaction avec des agents réticulants tels que des résines époxy et/ou des résines aminoplastes, par exemple des résines urée formaldéhyde ou des résines mélamine formaldéhyde.

D'autre part, ces résines sont obtenues par un procédé simple de mise en oeuvre. Comparées à celles décrites dans la demande de brevet français FR-A-2597489, les résines selon l'invention ne nécessitent pas de traitement d'oxydation préalablement à leur préparation.

Les exemples qui vont suivre, donnés à titre indicatif, permettront de mieux comprendre l'invention.

Dans ces différents exemples, les quantités de produits sont exprimées en parties en poids et les pourcentages sont des pourcentages en poids.

## EXEMPLE I :

Dans un réacteur équipé d'un dispositif d'agitation, on introduit 490 parties d'éthyl-glycol, 2 parties de 2,2-azobis (isobutyronitrile) et 136 parties d'une cire de polyéthylène ayant les caractéristiques suivantes :

| | | | |
|---|---|---|---|
| Poids moléculaire moyen en poids | ($M_w$) | : | 2 600 |
| Cristallinité | (%) | : | 10 |
| Viscosité à 140°C (poises) | | : | 0,6    (0,06 Pas) |
| Température de fusion (°C) | | : | 90 — 97 |

La température est portée à 125°C et un mélange de monomères et d'initiateurs radicalaires est introduit en continu pendant une période de 3 heures dans la phase parfaitement homogène de la dispersion de polyéthylène.

Le mélange de monomères catalysés est constitué de (en parties en poids) :

| | | |
|---|---|---|
| Styrène | : | 545 |
| Acrylate de butyle | : | 665 |
| Acide méthacrylique | : | 131 |
| Peroxyde de dicumyle | : | 28 |

La température est maintenue entre 125° et 130°C pendant la réaction.
Un palier de 1h-1h30 est ensuite maintenu pour compléter la phase de polymérisation.
Le produit obtenu présente les caractéristiques et les propriétés suivantes :
Solution visqueuse qui coule translucide en masse, transparente, en couche mince.
Extrait sec 75%.
Produit parfaitement applicable à la racle.
Film lisse, sec, très brillant.

## I. 1 PREPARATION D'UNE SOLUTION AQUEUSE

On prépare le mélange suivant : (en parties en poids)

```
- solution à 75 % d'extrait sec            :        100
  (préparée ci-dessus)
- diméthylaminoéthanol                     :         15
- eau                                      :         85
```

La solution obtenue possède un extrait de sec de 50%. Cette solution a une consistance crémeuse : elle est blanche, brillante et translucide.

Elle est facilement manipulable. D'autre part, comme démonré ci-dessous, elle est diluable à l'eau.

## 1.2 EXEMPLES DE DILUTION

1.2.1 / A 80 parties en poids de la solution à 50% d'extrait sec, on ajoute 34,3 parties en poids d'eau. On obtient une solution crémeuse onctueuse, lisse et blanchâtre dont la teneur en extrait sec est de 35%. Cette dernière solution est applicable à la racle.

1.2.2 / A 80 parties en poids de la solution à 50% d'extrait sec, on ajoute 17,3 parties en poids d'eau et 17 parties en poids d'isopropanol. On obtient une solution translucide ayant une teneur en extrait sec de 35% et une viscosité Brookfield de 7200 cPs (7,2 Pas). Cette dernière solution, après application sur papier donne un film très brillant et lisse qui présente une exellente résistance à l'eau (par immersion dans l'eau, ou eau sur le film).

## EXEMPLE II

Le mode opératoire, la nature et la quantité des réactifs sont identiques à celle de l'exemple I à l'exception du polyéthylène qui est une cire dure ayant les caractéristiques suivantes :

```
Poids moléculaire      (Mw)     :     2 900
moyen en poids
Cristallinité          (%)      :        40
Viscosité à 140°C      (poises) :       0,7   (0,07 Pas)
Domaine de fusion      (°C)     :   106 - 112
```

Le produit obtenu à la fin de la polymérisation présente les caractéristiques et les propriétés suivantes :
— c'est un produit cireux, facilement manipulable, translucide en masse, transparent en couche mince. Il possède une teneur en extrait sec de 75%.

Conformément à la formule décrite dans l'exemple 1 au paragraphe (I.1), on prépare une solution aqueuse à 50% d'extrait sec. Cette solution se présente sous la forme d'une masse brillante, translucide, difficilement manipulable à température ambiante en raison de sa viscosité élevée. Par contre, cette solution est parfaitement diluable à l'eau.

En effet, si on dilue cette solution à 50% d'extrait sec (en portant sa teneur en extrait sec à 35%) conformément au mode opératoire décrit dans l'exemple 1, au paragraphe I.2.1, on obtient une solution crémeuse, lisse, diluable à l'eau, qui est applicable a la racle et donne alors des films brillants et lisses.

De même, si on dilue cette solution à 50% d'extrait sec en portant sa teneur en extrait sec à 35% conformément au mode opératoire décrit dans l'exemple I, au paragraphe 1.2.2, on obtient une solution blanchâtre dont la viscosité est de 9200 cPs (9,2 Pas).

## EXEMPLE III

Le mode opératoire, la nature et la quantité des réactifs sont identiques à celle de l'exemple I à l'exception du polyéthylène qui est dans cet exemple une cire de dénommination commerciale CIRE POLY WAX W-2000 ayant les caractéristiques suivantes :

| Poids moléculaire moyen en nombre | (Mn) | : | 2 000 ± 200 | |
| Poids moléculaire moyen en poids (Mw) | | : | 2 300 ± 200 | |
| Cristallinité (%) | | : | 80 | |
| Viscosité à 140°C (poises) | | : | 0,5 | (0,05 Pas) |
| Température de fusion (°C) | | : | 120 - 125 | |

La température de polymérisation a été maintenue dans cet exemple entre 135 et 140°C.

Le produit obtenu à la fin de la polymérisation présente les caractéristiques et les propriétés suivantes :

C'est un produit cireux, blanc opaque en masse qui est translucide, transparent en couche mince. Il possède une teneur en extrait sec de 75%. D'autre part, ce produit est facilement manipulable et applicable à la racle.

Conformément à la formule décrite dans l'exemple 1 au paragraphe (I.1), on prépare une solution aqueuse à 50% d'extrait sec. On obtient une masse cireuse, translucide en couche mince et qui après application donne des films très brillants et secs.

Cette masse translucide est facilement manipulable et également diluable à l'eau.

En effet, si on dilue la solution à 50% d'extrait sec en portant sa teneur en extrait sec à 35% conformément au mode opératoire décrit dans l'exemple I, au paragraphe I.2.1, on obtient un produit crémeux, lisse onctueux qui est applicable à la racle. Après application, il donne des films brillants, très résistants à l'eau. Ce produit est également diluable à l'eau.

De même, si on dilue la solution à 50% d'extrait sec en portant sa teneur en extrait sec à 35% conformément au mode opératoire décrit dans l'exemple I, au paragraphe I.2.2, on obtient une solution blanchâtre dont la viscosité Brookfield est de 4800 cPs (4,8 Pas).

## EXEMPLE IV

Le mode opératoire, la nature et la quantité des réactifs sont identiques à celle de l'exemple I à l'exception de la nature du solvant qui est de l'éthoxypropanol et de la nature du polyéthylène qui est dans cet exemple un terpolymère d'éthylène obtenu par polymérisation de (en % en poids) :

| - éthylène | : | 90,5 |
| - acrylate d'éthyle | : | 6,0 |
| - anhydride maléïque | : | 3,5 |

D'autre part, ce terpolymère possède les caractéristiques suivantes :

- Poids moléculaire moyen en nombre (Mn) : 12 000

- Poids moléculaire moyen en poids (Mw) : 40 200

- Viscosité à 140°C (poises) : 1800 ± 200   (180 ± 20 Pas)

- Viscosité à 190°C (poises) : 300   (30 Pas)

- Indice de fluidité (norme ASTM D 1238) (g/mn) : 200

- Cristallinité (%) : 28 ± 3

- Zone de fusion (°C) : 95 à 102

En fin de réaction, on obtient une solution limpide légèrement nacrée à 80% d'extrait sec qui possède une viscosité égale à 500 000 cPs : (500 Pas).Le produit obtenu appliqué en couche mince (racle) donne des films secs possédant un brillant élevé.

D'autre part, le produit obtenu est diluable dans les solvants organiques, par exemple dans l'acétate d'éthyle.

Dans le tableau ci-dessous sont rassemblés les viscosités (exprimées en cPs) obtenues par dilution du produit à 80% d'extrait sec dans l'acétate d'éthyle.

| teneur en extrait sec % en poids | 70 | 63,8 | 60 | 50 | 40 | 30 |
|---|---|---|---|---|---|---|
| viscosité cPs (Pas) | 24 500 (24,5) | 4 750 (4,75) | 1 900 (1,9) | 620 (0,62) | 80 (0,08) | 22 (0,022) |

La solution à 80% d'extrait sec, peut après neutralisation avec une amine, être diluée avec de l'eau pour donner des solutions aqueuses parfaitement stables, éventuellement en présence d'un cosolvant, par exemple un alcool tel que l'éther méthylique, du propylène glycol, l'éthoxypropanol.

A 100 parties en poids de la solution à 80% d'extrait sec, on ajoute (en parties en poids) :

- éther méthylique du propylène glycol : 15

- diméthyl-amino éthanol : 7

- eau : 38

La solution obtenue possède les caractéristiques suivantes :

- teneur en extrait sec (% en poids) : 50

- PH : 9,1

- Viscosité (cPs) : 10 000   (10 Pas)

Cette solution est diluable à l'eau.

Dans le tableau ci-dessous sont rassemblées les viscosités (exprimées en cPs) obtenues par dilution de la solution à 50% d'extrait sec avec de l'eau.

| teneur en extrait sec % en poids | 40 | 30 | 25 | 20 | 16,7 | 13,3 |
|---|---|---|---|---|---|---|
| viscosité cPs (Pas) | 36 500 (36,5) | 500 000 (500) | 600 (0,6) | 47,5 (0,0475) | 25 (0,025) | 15 (0,015) |

## Revendications

1. Polymères et copolymères d'éthylène greffés caractérisés en ce qu'ils sont thermoplastiques et le cas échéant réticulables, solubles à température ambiante dans des solvants organiques et/ou des milieux aqueux et en ce qu'ils sont préparés par polymérisation de (en % en poids par rapport à la résine obtenue) :

— 0,5 à 30% d'au moins en polyéthylène non oxydé et/ou un copolymère d'éthylène non oxydé à base d'au moins 70% en poids d'éthylène, ledit polyéthylène ou copolymère d'éthylène étant défini par les propriétés suivantes :

• un poids moléculaire moyen en poids (Mw) compris entre 900 et 60000,
• une viscosité Brookfield à 190°C comprise entre 0,1 et 500 poises (dPas) et /ou une viscosité Brookfield à 140°C comprise entre 0,1 et 2000 poises (dPas),
• une cristallinité mesurée par rayons X comprise entre 10% et 80%,
• et comprenant éventuellement des fonctions esters, anhydrides ou acides provenant des comonomères de l'éthylène,

— 70 à 99,5% de monomères insaturés tels que des monomères styréniques, vinyliques, acryliques et/ou méthacryliques,

en présence d'au moins un initiateur de radicaux libres et d'au moins un solvant organique.

2. Procédé de préparation de résines selon la revendication 1 caractérisé en ce que :

a/ on prépare une phase dispersée en dispersant au moins un polyéthylène non oxydé et/ou au moins un copolymère d'éthylène sous agitation, dans au moins un solvant organique, à une température supérieure à la température de fusion du dit polyéthylène ou du dit copolymère d'éthylène,

b/ ensuite, on introduit progressivement dans la phase dispersée obtenue au moins un monomère éthylénique et au moins un initiateur de polymérisation radicalaire, de manière à permettre le greffage de chaines de monomères sur le polyéthylène et/ou le copolymère d'éthylène,

c/ la réaction est ensuite poursuivie à une température égale ou supérieure à celle choisie dans l'étape (b).

d/ en fin de réaction, on refroidit la résine obtenue.

3. Procédé selon la revendication 2, caractérisé en ce que pendant l'étape (a), on prévoit une température de réaction supérieure de 5 à 15°C par rapport à la température de fusion du polyéthylène ou du copolymère d'éthylène.

4. Procédé selon la revendication 2 ou 3, caractérisé en ce que la température est maintenue constante pendant l'étape (b), à une valeur égale ou supérieure à celle choisie dans l'étape (a).

5. Application des résines selon la revendication 1 comme liants pour revêtements dans les peintures, les vernis et les encres.

## Patentansprüche

1. Gepfropfte Ethylen-Polymere und -Copolymere, **dadurch gekennzeichnet,** daß sie thermoplastisch und

8

gegebenenfalls vernetzbar, bei Raumtemperatur in organischen Lösungsmitteln und/oder in wässerigen Medien löslich sind und daß sie hergestellt werden durch Polymerisation von (in Gew.-% bezogen auf das erhaltene Harz) :

— 0,5 bis 30% mindestens eines nicht oxidierten Polyethylens und/oder eines nicht oxidierten Ethylencopolymeren auf der Basis von zumindest 70 Gew.-% Ethylen, wobei das Polyethylen oder Ethylencopolymer durch folgende Eigenschaften definiert ist :

• ein mittleres Molekulargewicht (Mw) zwischen 900 und 60000,

• eine Brookfield-Viskosität bei 190°C zwischen 0,1 und 500 Poise (dPas) und/oder eine Brookfield-Viskosität bei 140°C zwischen 0,1 und 2000 Poise (dPas),

• eine durch Röntgenstrahlen gemessene Kristallinität zwischen 10 und 80%,

• und gegebenenfalls enthaltend Ester-, Anhydrid- oder Säurefunktionen, die aus den Ethylencomonomeren stammen,

— 70 bis 99,5% ungesättigten Monomeren, wie Styrol-, Vinyl-, Acryl- und/oder Methacrylmonomeren

in Gegenwart mindestens eines Initiators für freie Radikale und mindestens eines organischen Lösungsmittels.

2. Verfahren zur Herstellung von Harzen nach Anspruch 1, **dadurch gekennzeichnet,** daß man :

a/ eine disperse Phase herstellt, indem man mindestens ein nicht oxidiertes Polyethylen und/oder mindestens ein Ethylencopolymer unter Rühren in mindestens einem organischen Lösungsmittel bei einer Temperatur oberhalb der Schmelztemperatur dieses Polyethylens oder dieses Ethylencopolymeren dispergiert,

b/ anschließend in die erhaltene dispergierte Phase fortschreitend mindestens ein ethylenisches Monomer und mindestens einen Initiator für radikalische Polymerisation derart einbringt, daß die Pfropfung der Monomerketten auf das Polyethylen und/oder das Ethylencopolymer ermöglicht wird,

c/ die Reaktion anschließend bei einer Temperatur, die gleich oder höher als die für Stufe (b) gewählte ist, vor sich gehen läßt und

d/ am Ende der Reaktion das erhaltene Harz abkühlt.

3. Verfahren nach Anspruch 2, **dadurch gekennzeichnet,** daß während der Stufe (a) eine Reaktionstemperatur von mehr als 5 bis 15°C oberhalb der Schmelztemperatur des Polyethylens oder des Ethylencopolymeren eingestellt wird.

4. Verfahren nach Anspruch 2 oder 3, **dadurch gekennzeichnet,** daß die Temperatur während der Stufe (b) konstant auf einem Wert gehalten wird, der gleich oder höher als der für Stufe (a) gewählte ist.

5. Verwendung der Harze nach Anspruch 1 als Bindemittel für Beschichtungen von Anstrichen, Lacken und Druckfarben.

## Claims

1. Grafted ethylene polymers and copolymers, characterised in that they are thermoplastic and, if appropriate, cross-linkable and soluble at ambient temperature in organic solvents and/or aqueous media and in that they are prepared by polymerisation of (in % by weight relative to the resin obtained) :

— 0.5 to 30% of at least one unoxidised polyethylene and/or an unoxidised ethylene copolymer based on at least 70% by weight of ethylene, the said polyethylene or ethylene copolymer being defined by the following properties :

a weight-average molecular weight (Mw) of between 900 and 60,000,

A Brookfield viscosity at 190°C of between 0.1 and 500 poises (dPa s) and/or a Brookfield viscosity at 140°C of between 0.1 and 2,000 poises (dPa s), a crystallinity, measured by X rays, of between 10% and 80%,

and comprising, if appropriate, ester, anhydride or acid functional groups originating from the ethylene comonomers,

— 70 to 99.5% of unsaturated monomers such as styrene-based, vinyl, acrylic and/or methacrylic monomers, in the presence of at least one free-radical initiator and of at least one organic solvent.

2. Process for preparing resins according to Claim 1, characterised in that :

a/ a disperse phase is prepared by dispersing at least one unoxidised polyethylene and/or at least one ethylene copolymer in at least one organic solvent, with stirring, at a temperature above the melting temperature of the said polyethylene or of the said ethylene copolymer,

b/ at least one ethylenic monomer and at least one radical polymerisation initiator are then introduced progressively into the disperse phase obtained, so as to allow grafting of monomer chains onto the polyethylene and/or onto the ethylene copolymer,

c/ the reaction is then continued at a temperature equal to or higher than that chosen in step (b), and

d/ at the end of the reaction, the resin obtained is cooled.

3. Process according to Claim 2, characterised in that during the step (a) a reaction temperature which is 5 to 15°C higher relative to the melting temperature of the polyethylene or of the ethylene copolymer is provided for during the step (a).

4. Process according to Claim 2 or 3, characterised in that during the step (b) the temperature is kept constant at a value equal to or higher than that chosen in the step (a).

5. Application of the resins according to Claim 1 as binders for coatings in paints, varnishes and inks.